# EUROPEAN PATENT SPECIFICATION

(11) **EP 1 236 770 B1**
(45) Date of publication and mention of the grant of the patent: **07.06.2006**
(21) Application number: 01301873.4
(22) Date of filing: 01.03.2001
(51) Int. Cl.: C08L 23/10, C08L 23/16

(54) **Polyethylene compositions for rotomolding**
Polyethylen-Mischungen zum Rotationsgiessen
Compositions de polyéthylène utilisées dans le moulage par rotation

(43) Date of publication of application: 04.09.2002
(60) Divisional application: 06006357.5
(73) Proprietor: Borealis Technology Oy, 06101 Porvoo (FI)
(72) Inventor: Follestad, Arild, 3960 Stathelle (NO); Ommundsen, Espen, 3970 Langesund (NO); Fosse, Knut, 3711 Skien (NO)
(74) Representative: Campbell, Neil Boyd

(56) References cited:
- AU-A- 2 128 099
- US-A- 6 111 023
- DATABASE WPI Derwent Publications Ltd., London, GB; AN 1996-045404 XP002172829 & JP 07 309909 A (MITSUI), 28 November 1995 (1995-11-28)

## Description

This invention relates to the use of a particular polymer composition in for example, rotational moulding as well as to the polymer composition itself, to rotomoulding processes using the same and to rotomoulded articles made from the polymer composition. More specifically, the invention concerns the use of a polymer composition which comprises at least two components formed by single site catalysis having particular molecular weight distributions, comonomer compositions and densities.

Rotational moulding is a moulding process in which a particulate polymer, the moulding powder, is filled into a mould which is placed into an oven and rotated so that the polymer melts and coats the inside surface of the mould. In order to ensure that the moulded product is defect free, the moulding powder must have a relatively small particle size and should preferably be uniform in particle size and composition. Where, as is normal, the moulding powder has to contain colouring agents or other additives, e.g. stabilisers, the moulding powder is conventionally produced by grinding polymer pellets extruded from stabilised reactor grain powder to the correct particle size for rotation of moulding, usually this the colours or other additives being added in with the polymer pellets are mixed into the ground and moulding powder.

A wide variety of articles may be prepared by rotational moulding. In particular rotational moulding is used in the manufacture of large objects such as liquid containers, e.g. tanks, boats, as well as in a large number of household areas, e.g. in the manufacture of toys.

The nature of the polymer rotomoulded depends very much on the nature of the article to be made. For example, if a chemical tank is being made, then the polymer used should be one which is not degraded by the chemical and one which has particular mechanical properties so that the container does not break under stress. Polymers used for the manufacture of toys must be completely non-toxic and again must be strong to prevent breakage. Articles for outdoor use such as boats must also be resistant to degradation from by the elements, e.g. sunlight, rain, frost or seawater. The mechanical properties of the rotomoulding powders are therefore critical.

Another important property is rheology and it is also critical that this is favourable. Rheology is a measure of non-Newtonian solid flow and it is crucial that flow be within certain limits to ensure that product properties are ideal.

Moreover, when making objects where a well defined shape is required, it is also desired that the eventual rotomoulded product does not warp, i.e. that the sides of a product remain undistorted.

A variety of polymers may be successfully rotomoulded although homo and copolymers of ethylene and homo and copolymers of propylene may in particular be mentioned. However, the nature of the catalyst used to make the polymer has a significant bearing on the rotomouldability of the polymer.

In rotomoulding, polymers produced from single site catalysts give rise to products having excellent mechanical properties and enable rotomoulding to be carried out over a much shorter period of time. Polymers produced from single site catalysts tend to have a narrow molecular weight distribution and copolymers produced from single site catalysts tend to have narrow comonomer distribution. These properties gives rise to increased environmental stress cracking resistance and improvements in other mechanical properties.

However, the narrow distribution of comonomers as compared to a Ziegler-Natta produced polymer, results in a much narrower melting and crystallisation behaviour. The sharp melting behaviour makes the polymer very sensitive to processing temperature and, without wishing to be limited by theory, it is believed that this causes severe warpage in rotomoulding products. Hence, the mechanical property benefits of using a polymer made by single site catalysis are offset by increased warpage.

Polymers produced using Ziegler-Natta catalysts have much broader melting/crystallisation windows than polymers made by single site catalysis and hence tend to produce rotomoulding products with much less warpage. However, due to the broad comonomer distribution and broad molecular weight distribution mechanical properties, especially ESCR and rheology are not so favourable.

In AU1999/21290 a rotational moulding composition is described in which at least two polyethylenes are present, one produced by metallocene technology having a density in the range 0.870 to 0.960 g/cm³ and a MFI in between 1.5 and 30 g/10min.

US 6111023 describes articles made from polyethylene copolymer components:

There still remains therefore, the need to find a polymer suitable for rotational moulding that can give rise to products having both low warpage and excellent rheological and mechanical properties.

It has now been surprisingly found that by forming, e.g. blending, a particular mix of polymers, preferably made by single site catalysis a polymer composition may be produced which not only has excellent mechanical and rheological properties but also does not warp after rotomoulding since its processing window is broadened. A blend of polymers having, depending on the monomers involved, similar molecular weights and similar melt flow rates but different densities, melting points or comonomer distributions has surprisingly been found to give rise to a composition which shows an overall narrow molecular weight distribution and hence excellent mechanical and rheological properties and has a broadened processing window which eliminates warpage normally associated with single site materials.

Hence, viewed from one aspect the invention provides a polymer composition suitable for rotomoulding comprising
I) an ethylene homopolymer having a melt flow rate of 0.5 to 30, preferably 3 to 15, especially 6 to 8, a molecular weight distribution (Mw/Mn) of less than 4, preferably less than 3.5, especially less than 3, an Mw of 50,000 to 110,000, a density of 0.940 g/cm³ to 0.970 g/cm³ and a melting point of 100 to 145°C;
   and
II) an ethylene copolymer with at least one C₃₋₁₀ α-olefin, having a melt flow rate of within ± 40%, preferably 20% of the melt flow rate of component (I), a molecular weight distribution of (Mw/Mn) of less than 4, an Mw of within ± 30%, preferably 20% of the Mw of component (I), a density of 0.880 g/cm³ to 0.940 g/cm³, preferably 910 g/cm³ to 0.930 g/cm³ said density being at least 0.010 g/cm³ less than the density of component (I) and a melting point of at least 5°C, preferably at least 10°C less than that of component (I).

Viewed from another aspect the invention provides the use of a polymer composition as hereinbefore described in rotomoulding.

Viewed from yet another aspect the invention provides a process for the preparation of an article comprising rotomoulding a composition as herein before defined.

Viewed from yet another aspect the invention provides a rotomoulded article comprising a polymer composition as hereinbefore described.

Unless otherwise stated densities are measured according to ISO 1183-1987(E). MFR is measured according to ISO 1133-1997 (D -for PE). The melting point of polyethylene is measured by heating the polymer from room temperature to 200°C at a heat rate of 10°C/min. The polymer is maintained at 200°C for 5 mins and then cooled to -10°C at a cool rate of 10°C/min and maintained at -10°C for 1 minute. The polymer is then heated to 200°C at a heat rate of 10°C/min and the melting point is taken on this second heat run. GPC analyses were carried out under the following conditions:
Equipment: Waters 150 CV plus no. 1115
Detector: Refractive Index (RI) and Viscosity detector Calibration: Narrow molecular weight distribution PS 1. Columns: 3 x HT6E styragel from Waters (140°C).

Component (II) is a copolymer of ethylene with at least one other C₃₋₁₀ α-olefin. Suitable comonomers include propylene, 1-butene, 1-hexene, 1-octene etc. In a preferred embodiment component (II) is a copolymer of ethylene with octene, butene or hexene, especially butene or hexene.

The polymer components (I) and (II) should have similar melt flow rates, i.e. the melt flow rate of component (II) should not differ from the melt flow rate of component (I) by greater than 40%, e.g. 20%, preferably no more than 10%, especially no more than 5%. The melt flow rate of the components should be in the range 0.5 to 30, preferably 1 to 20, more preferably 3 to 15, e.g. 4 to 10, especially 6 to 8, most especially about 6. In a highly preferred embodiment both components (I) and (II) have a MFR of about 6.

The melt flow rate of the entire composition should also be in the range 0.5 to 30, preferably 1 to 20, more preferably 2 to 15, e.g. 4 to 10, especially 6 to 8, most especially about 6.

The molecular weight distribution (MWD) of both components should be approximately the same, e.g. within 10%, and the MWD must be narrow, e.g. an (Mw/Mn) of less than 4, preferably less than 3.5, especially less than 3. The MWD of the entire composition should also preferably be less than 4, especially less than 3.5.

Whilst the Mw and Mn ranges may vary within wide limits the Mw/Mn ratio remains low, i.e. less than 4. In a preferred embodiment the Mw and Mn of both components are also similar. For a polyethylene homopolymer or copolymer suitable Mw values are in the range 50000 to 110000, especially 65000 to 85000.

The densities of the two components should be different, i.e. component (II) should have a density at least 0.010 g/cm³, especially 0.020 g/cm³ different from component (I). Preferably component (I) should have a density in the range 0.940 to 0.970 g/cm³ and component (II) should have a density in the range of 0.880 to 0.940 g/cm³, preferably in the range 0.910 g/cm³ to 0.930 g/cm³, said density preferably being at least 0.010 g/cm³ less than the density of component (I).

The density of the entire composition is preferably in the range 0.925 to 0.950 g/cm³, preferably 930 to 0.940 g/cm³.

The two components must also have different crystallinity properties, i.e. components (I) and (II) should have different melting points. This may be achieved by providing copolymers with differing comonomer contents.

Component (II) should have a melting point which differs from that of component (I) by at least 5°C, preferably at least 10°C, especially at least 20°C.

Thus an especially preferred composition according to the invention is a composition in which component (I) is an ethylene homopolymer having an MFR of 6 to 8, a molecular weight distribution of less than 3, an Mw of 65,000 to 100,000, an Mn of 20,000 to 60,000, a density of 0.945 to 0.970 g/cm³ and a melting point of 125 to 135°C; and component (II) is an ethylene copolymer with hexene having an MFR of 6 to 8, a molecular weight distribution of less than 3, an Mw of 65,000 to 100,000, an Mn of 20,000 to 60,000, a density of 0.910 to 0.940 g/cm³ and a melting point of 100 to 125°C.

In order to prepare the required polymer for rotomoulding, components (I) and (II) may be blended using conventional blending or compounding technology. The components (I) and (II) may be mixed in any convenient ratio to ensure that the desired properties are obtained. Preferably however, the ratio of component (I) to (II) is from 95:5 to 5:95, preferably 9:1 to 1:9, especially 4:1 to 1:4, more especially 1:2 to 2:1.

Components (I) and (II) may also be used in conjunction with other polymers in the blend such as rotomoulding polymer grades and some Ziegler-Natta polymers. Moreover, it is within the scope of the invention to use a further polymer component (III) which also has a MWD and MFR similar to components (I) and (II) but has a still different comonomer distribution hence producing a multimodal comonomer distribution.

The polymer composition described above gives rise to rotomoulded articles with excellent mechanical and rheological properties and low warpage.

The components are preferably produced using a single site catalyst, e.g. metallocene catalyst. However, component (I) may be made by Ziegler-Natta catalysis. This is not however, preferred. Suitable metallocene catalysts for use in the invention may be any conventional metallocene catalyst. As used herein, the term metallocene is used to refer to all catalytically active metal:η-ligand complexes in which a metal is complexed by one, two or more open chain or closed ring η-ligands. The use of bridged bis-η-ligand metallocenes, single n-ligand "half metallocenes", and bridged η-σ ligand "scorpionate" metallocenes is particularly preferred. The metal in such complexes is preferably a group 4A, 5A, 6A, 7A or 8A metal or a lanthanide or actinide, especially a group 4A, 5A or 6A metal, particularly Zr, Hf or Ti. The η-ligand preferably comprises an η⁴ or η⁵ open chain or an η⁵-cyclopentadienyl ring, optionally with a ring or chain carbon replaced by a heteroatom (e.g. N, B, S or P), optionally substituted by pendant or fused ring substituents and optionally linked by bridge (e.g. a 1 to 4 atom bridge such as (CH₂)₂, C(CH₃)₂ or Si(CH₃)₂) to a further optionally substituted homo or heterocyclic cyclopentadienyl ring. The ring substituents may for example be halo atoms or alkyl groups optionally with carbons replaced by heteroatoms such as O, N and Si, especially Si and O and optionally substituted by mono or polycyclic groups such as phenyl or naphthyl groups. Suitable η-ligands, include those of formula II discussed above. Examples of such homo or heterocyclic cyclopentadienyl ligands are well known in the art (see e.g. EP-A-416815, WO96/04290, EP-A-485821, EP-A-485823, US-A-5276208 and US-A-5145819).

Besides the η-ligand, the metallocene complex used according to the invention may include other ligands; typically these may be halide, hydride, alkyl, aryl, alkoxy, aryloxy, amide, carbamide or other two electron donor groups. Any hydrocarbyl ligand here will generally contain up to 20 carbons, preferably up to 10 carbons, e.g. up to 6 carbons.

Metallocene catalysts are conventionally employed in the presence of a cocatalyst. Suitable cocatalysts are well known and include alkyl metal compounds, in particular alumoxanes. Suitable alumoxanes include C₁₋₁₀ alkyl alumoxanes, e.g. methyl alumoxane (MAO) and isobutyl alumoxanes (e.g. tetra and hexaisobutyl alumoxane, TIBAO and HIBAO), especially MAO. Alumoxane co-catalysts are described by Hoechst in WO-A-94/28034. These are considered cyclic or cage like oligomers having up to 40, preferably 3 to 20, -[Al(R")O]- repeat units (where R" is hydrogen, C₁₋₁₀ alkyl, preferably methyl, or C₆₋₁₈ aryl or mixtures thereof).

If desired the metallocene or metallocene/cocatalyst mixture may be used in unsupported form or it may be precipitated and used as such. However the metallocene or its reaction product with the cocatalyst is preferably introduced into the polymerization reactor in supported form, e.g. impregnated into a porous particulate support, as is well known in the art.

The particulate support material used is preferably an organic or inorganic material, e.g. a polymer (such as for example polyethylene, polypropylene, an ethylenepropylene copolymer, another polyolefin or polystyrene or a combination thereof). Such polymeric supports may be formed by precipitating a polymer or by a prepolymerization, eg of monomers used in the polymerization for which the catalyst is intended. However, the support is especially preferably a metal or pseudo metal oxide such as silica, alumina or zirconia or a mixed oxide such as silica-alumina, in particular silica, alumina or silica-alumina.

Especially preferably the support is a porous material so that the metallocene may be loaded into the pores of the support, e.g. using a process analogous to those described in WO94/14856 (Mobil), WO95/12622 (Borealis) and WO96/00243 (Exxon). The particle size is not critical but is preferably in the range 5 to 200 µm, more preferably 10 to 80 µm.

Before loading, the particulate support material is preferably calcined, i.e. heat treated, preferably under a non-reactive gas such as nitrogen. This treatment is preferably at a temperature in excess of 100°C, more preferably 200°C or higher, e.g. 200-800°C, particularly about 300°C. The calcination treatment is preferably effected for several hours, e.g. 2 to 30 hours, more preferably about 10 hours.

A cocatalyst, e.g. an alumoxane or an ionic catalyst activator (such as a boron or aluminium compound, especially a fluoroborate) may also be mixed with or loaded onto the catalyst support material. This may be done subsequently or more preferably simultaneously to loading of the metallocene, for example by including the cocatalyst in the solution of the metallocene or, by contacting the metallocene loaded support material with a solution of the cocatalyst or catalyst activator, e.g. a solution in an organic solvent. Alternatively however, any such further material may be added to the metallocene loaded support material in the polymerization reactor or shortly before dosing of the catalyst material into the reactor.

In this regard, as an alternative to an alumoxane it may be preferred to use a fluoroborate catalyst activator, especially a B(C₆F₅)₃ or more especially a ^{⊖}B(C₆C₅)₄ compound, such as C₆H₅N(CH₃)₂H:B(C₆C₅) or (C₆H₅)₃C:B(C₆F₅)₄. Other borates of general formula (cation⁺)ₐ (borate⁻)_{b} where a and b are positive numbers, may also be used.

The polymerisation is typically conducted in the presence of a diluent. As a diluent, a linear, branched or cyclic saturated hydrocarbon such as butane, propane, pentane, hexane, heptane, octane, cyclohexane or methylcyclohexane may be used.

Polymerisation to produce the polymer for use in the invention may take place in the slurry, solution or gas phase. Slurry phase polymerisation can be conducted under standard slurry conditions.

For slurry reactors, the reaction temperature will generally be in the range 60 to 110°C (e.g. 80-110°C), the reactor pressure will generally be in the range 5 to 80 bar (e.g. 25-65 bar), and the residence time will generally be in the range 0.3 to 5 hours (e.g. 0.5 to 2 hours). The diluent used will generally be an aliphatic hydrocarbon having a boiling point in the range -70 to +100°C, especially isobutane or propane.

For solution phase reactors, the reaction temperature used will generally be in the range 130 to 270°C, the reactor pressure will generally be in the range 20 to 400 bar and the residence time will generally be in the range 0.1 to 1 hour. The solvent used will commonly be a hydrocarbon with a boiling point in the range 80-200°C.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen together with monomer (e.g. ethylene).

In order to ensure that copolymer particles are in the correct size for rotational moulding the products of any polymerisation reaction may be converted to powder form or pelletized to a particle size of approximately 0.1 to 0.5 mm, preferably 0.3 mm using standard technology. Hence, suitably sized pellets may be prepared by grinding.

Alternatively micropellets may be produced using the technique described in WO 00/35646. By this method a mixture of polyolefin and optionally at least one additive is extruded in melt form through a die and pelletised to give particles having a particular size distribution. The particles are then dried to very low levels of moisture to improve rotomouldability.

In one embodiment of the invention rotomoulding may be carried out by combining polymer powder with a masterbatch of UV-stabiliser-loaded polyolefin powder in line with the teaching of WO00/11065.

The polymer powder or pellets can comprise any standard additives e.g. one or more selected from colouring agents, stabilisers, antioxidants, UV-absorbers, anti-static agents, lubricants and fillers.

Rotational moulding may take place under standard conditions. The polymer powder is placed in the mould which is then transferred to an oven and rotated, preferably about two axes to distribute the polymer powder over the hot surfaces of the mould. The heating cycle is continued until all of the powder has melted and formed a thick, continuous layer within the mould. The mould is then removed from the oven and cooled until the resin has solidified. The moulded part is then removed.

The length of time which the mould must be heated depends on the nature of the article being moulded, the amount of resin present and the temperature of the oven. Typical rotomoulding temperatures are 230°C to 350°C, more particularly 260°C to 320°C. Heating time is chosen such that the inner air temperature in the mould is 160°C to 300°C, more preferably 170°C to 250°C. This temperature can be measured using a Rotolog® or similar equipment to monitor the temperature or it may be chosen based on previous experience. Cooling may be carried out under a stream of air, water spray or mist or simply in ambient air at room temperature. A combination of these methods may also be employed. Preferably cooling is achieved using a combination of blown air followed by ambient air or just blown air. Cooling times are normally of similar magnitude to heating times or slightly longer. Slow cooling reduces the amount of warpage present in a rotomoulded article however, it is a purpose of the invention to provide polymer compositions which can be cooled more rapidly without increases in warpage compared to conventional single site polymers. The moulded tank may be removed from its mould at any convenient time although it is preferred if it is removed when it has cooled to a temperature of 60°C to 100°C.

The skilled artisan is able to manipulate the temperature, time and rotation speed/ratio within a rotomoulding apparatus to ensure that well-formed moulded articles are produced.

Particularly preferred rotomoulding conditions are Rotation Speed 9/1.4 RPM; heating for 13 minutes in oven at 270°C; fan assisted cooling for 10 minutes followed by ambient air cooling for 6 minutes.

The invention will now be further illustrated with reference to the following non-limiting examples and figures.

### Example 1

Two polymer components A and B were prepared as described in Annex 1 below. The catalyst used was made from (nBu-Cp)ZrCl2 and MAO impregnated on a support of calcined silica. Polymerisations took place in a bench scale semibatch reactor with hydrogen premixed in Component A is an ethylene homopolymer made from a single site catalyst having a density of 0.957 g/cm³, an Mw of 77000, an Mn of 28000 giving a Mw/Mn of 2.7, a melting point of 132°C and a MFR of 6.

Component B is an ethylene/hexene copolymer having a density of 0.923 g/cm³, a Mw of 67000 and Mn of 31000 giving an Mw/Mn of 2.1, an MFR of 8 and a melting point of 120°C. These components were compounded together, optionally with further polyethylene reactor powders, RP1 and RP2 having a density of 0.934 g/cm³ and an MFR of 6 or a density of 0.939 g/cm³ and an MFR of 6 respectively. The polymer blend was completed by the addition of an antioxidant and a slip agent.

The polymer blends prepared are shown in Table 1 below:

**Table 1**

| Sample | Comp. A | RP1 | RP2 | Comp. B |
|---|---|---|---|---|
| 934Y | 18% | 25% | 57% | - |
| 934A | 64% | - | - | 36% |
| 934B | 32% | 50% | - | 18% |
| 934C | 16% | 750 | - | 9% |
| 934D | 8% | 87.5% | - | 4.5% |
| 934Ref | - | 100% | - | - |

All blends were made to a total of 4 kg which resulted in approximately 3.8 kg of granules. These blends were then ground leaving at least 2.8 kg of powder. The overall density of each blend was 0.934 g/cm³, except 934Y which had a density of 0.940 g/cm³.

In addition, some commercially available polymer grades were readied for rotomoulding.

RM 8403, an ethylene/hexene copolymer available from Borealis A/S, is a polymer produced from a metallocene catalyst having the following properties: Mw=75000, Mn=34000, MWD=2.2, MFR 6, density 940 g/cm³, melting point 125°C, heat of fusion 194 J/g, cryst Temp 110°C, heat of cryst -158 J/g.

RM 8343, an ethylene/hexene copolymer available from Borealis A/S, is a polymer produced from a metallocene catalyst having the following properties: Mw 76000, Mn=34000, MWD=2.2 MFR 6, density 934 g/cm³, melting point 123°C, heat of fusion 176 J/g, cryst Temp 108°C, heat of cryst -156 J/g.

ME8152, an ethylene/butene copolymer available from Borealis A/S, is a polymer produced from a Ziegler-Natta catalyst having the following properties: Mw 101000, Mn 25000, MWD 4.1, MFR 3.5, density 934 g/cm³, melting point 125°C, heat of fusion 180 J/g, cryst Temp 110°C.

The properties of each blend are further explained in the table below

| | 934ref | 934A | 934B | 934C | 934D | 934Y |
|---|---|---|---|---|---|---|
| Density | 935.1 | 934.9 | 935.3 | 935.3 | 934.6 | 940.6 |
| Melt pt | 123.4 | 127 | 125 | 124.4 | 123.7 | 127 |
| heat of fusion | 163 | 163 | 164 | 164 | 160 | 182 |
| cryst T | 109 | 112.3 | 110.6 | 110 | 109.6 | 112.6 |
| heat of cryst | -155 | -151 | -153 | -154 | -148 | -173 |

### Example 2

Samples were rotomoulded under one or more of the following sets of conditions to form boxes.

### Rotomoulding Serial 1

No preheating; Rotation Speed 9/1.4 RPM; heating for 13 minutes in oven at 270°C; fan assisted cooling for 10 minutes followed by 6 minutes ambient cooling in the absence of a fan. 700 g of polymer employed; Max mould temperature 227°C, mould temperature at start 35°C.

### Rotomoulding Serial 3

Mould was preheated to 60°C; Rotation Speed 4/2; heating for 13 minutes in oven at 270°; fan assisted cooling for 30 minutes. 700 g of polymer employed; Max mould temperature 227°C, mould temperature at start 60°C.

The boxes resulting from the rotomoulding were cubes having sides of approximately 20 cm. The edges of the boxes were trimmed.

### Example 3

Warpage of the rotomoulded boxes was measured on five of the six cube walls (not the top wall). A ruler with a micrometer was used diagonally on each side of the box. Results are depicted in Table 2 relative to results achieved with ME8152.

**Table 2**

| Box | Average Warpage |
|---|---|
| ME8152 - Roto Serial 3 | 100% |
| ME8152 - Roto Serial 1 | 66% |
| RM8343 - Roto Serial 3 | 143% |
| RM8343 - Roto Serial 1 | 92% |
| 934A - Roto Serial 3 | 72% |
| 934A - Roto Serial 1 | 38% |

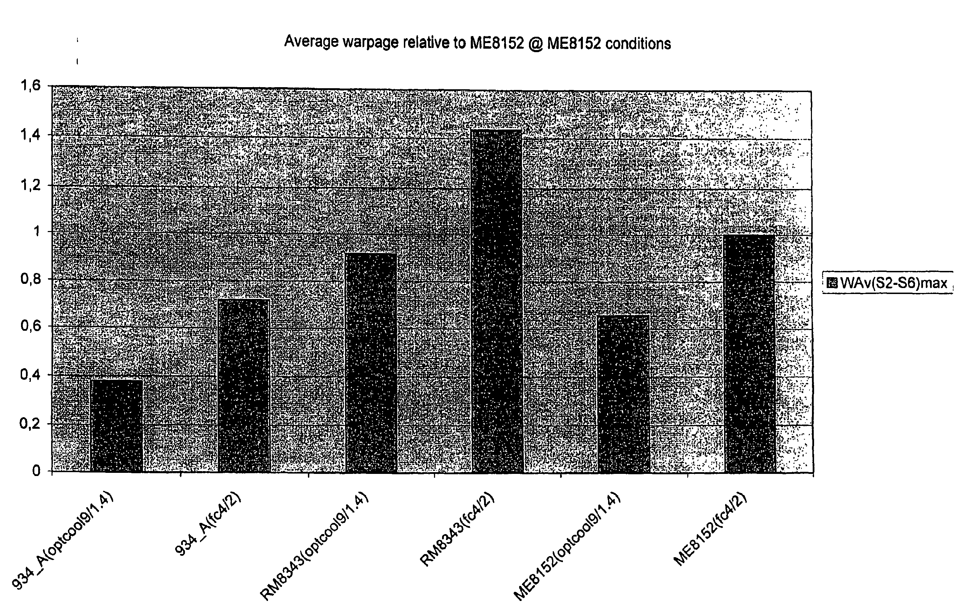

These results are graphically depicted in Figure 1.

### Example 4

Thickness variation in the walls of the boxes was measured by taking five wall thickness measurements from each side of the boxes. Average thickness variation is standard deviation for all points of each box relative to ME8152. The results are depicted in Table 3 below.

**Table 3**

| Box | Thickness variation |
|---|---|
| ME8152 - Roto Serial 3 | 100% |
| ME8152 - Roto Serial 1 | 38% |
| RM8343 - Roto Serial 3 | 115% |
| RM8343 - Roto Serial 1 | 33% |
| 934A - Roto Serial 3 | 53% |
| 934A - Roto Serial 1 | 59% |

The data collected to obtain these results is shown in the attached Annex 2 in which 9_1.4 std represents rotomoulding Serial 1 and 4_2 full cool represents rotomoulding serial 3.

### Discussion

Blends with the broadest comonomer distribution have significantly less warpage and thickness variation than the reference materials. Moreover, an analysis of the crystal lattice structure of 934A reveals a much finer crystal structure which should make the material more robust to morphological changes. The appearance of the boxes made with 934A was also improved and fewer air bubbles are formed in the rotomoulded article.

### Example 5

Mechanical Properties. The following tests were employed to test the mechanical properties of the boxes produced.
Tensile Modulus: ISO527-1 (1993)
Instrument Falling Weight (IFW) ISO 6603-2: 1989

Circular disks with diameter 60 mm are used with a hemispherical striker of mass 10 kg and 20 mm diameter. Falling height 1 m at a velocity of 4.4m/s at -20°C. Rupture was ductile.
ESCR - ASTM D1693-97/ISO 1872-2: 1997

Standardised specimens are notched and stressed before being lowered into a solution of detergent at 50°C. (Detergent 10% Antarox (Igepal) CO-630. Specimen thickness 2 mm. Examination every 4 hours and calculation is based on probability of 50% broken samples.

### Density - ISO 1183: 1987

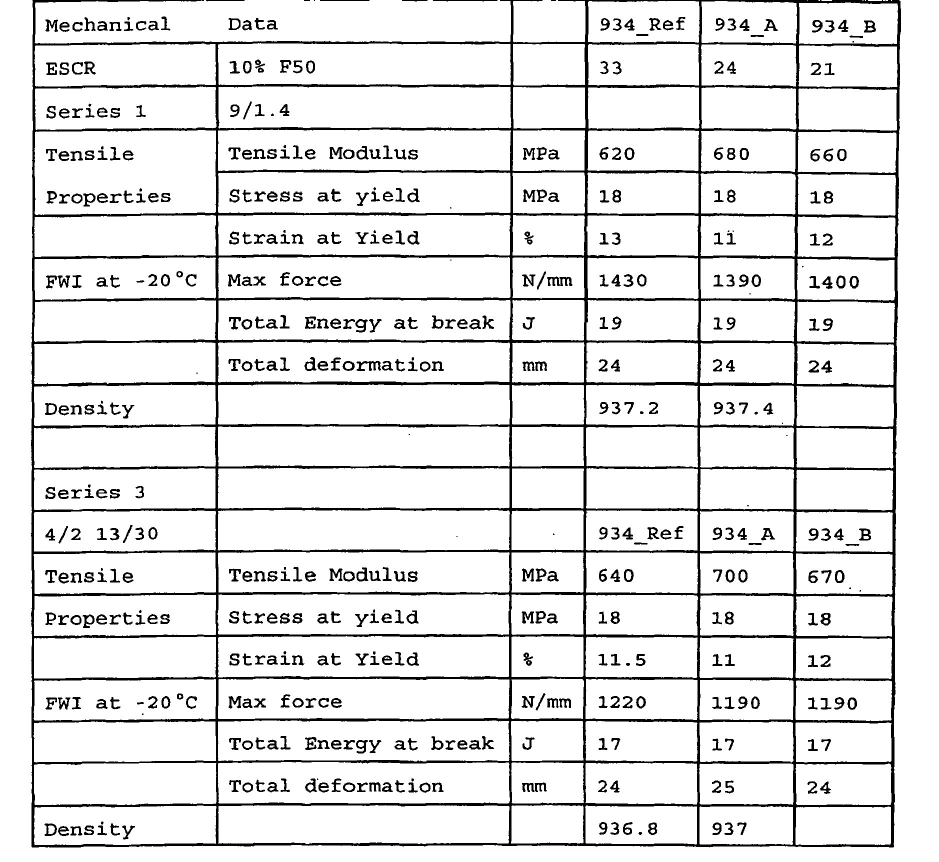

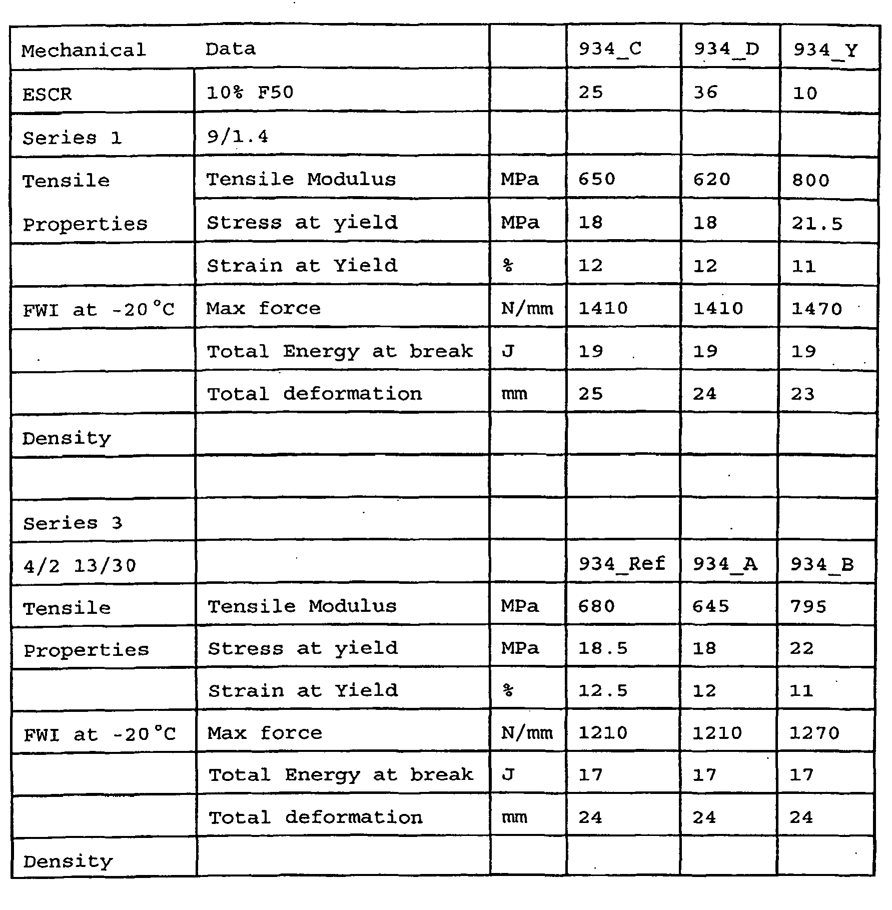

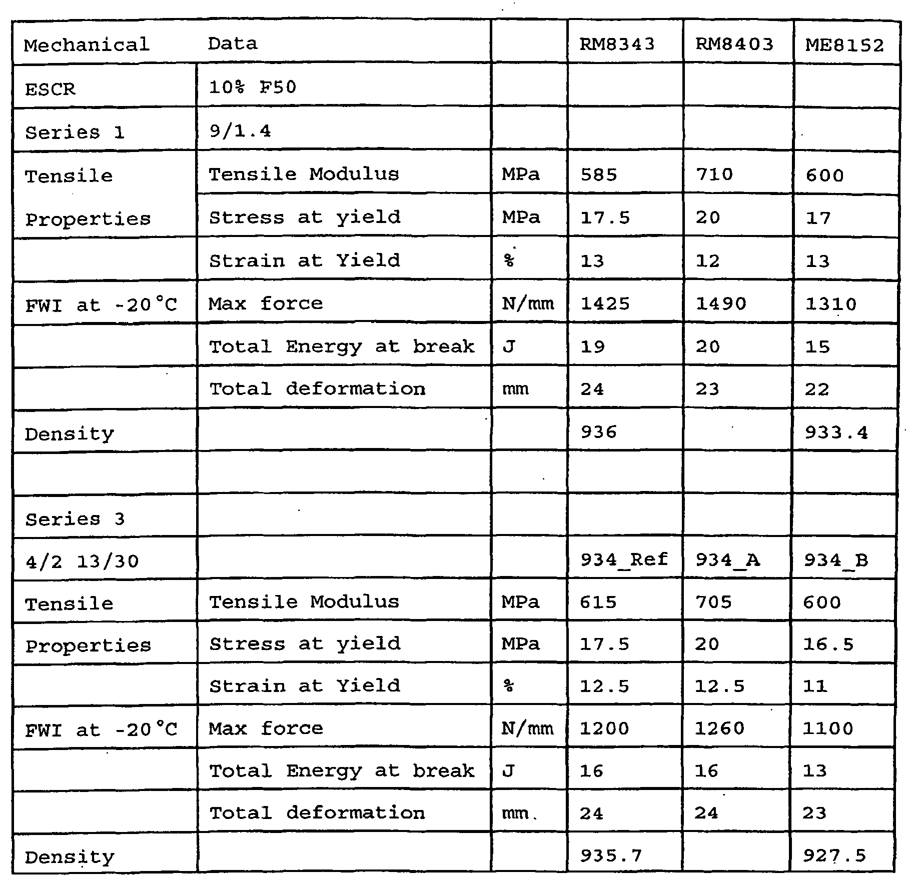

934Y has the most favourable tensile and impact properties but has lower ESCR. Overall, compositions of the invention show improved warpage, stiffness, morphology and comparable or improved ESCR. Grade 934A ha also been found to have increased high temperature stiffness.

### Example 6

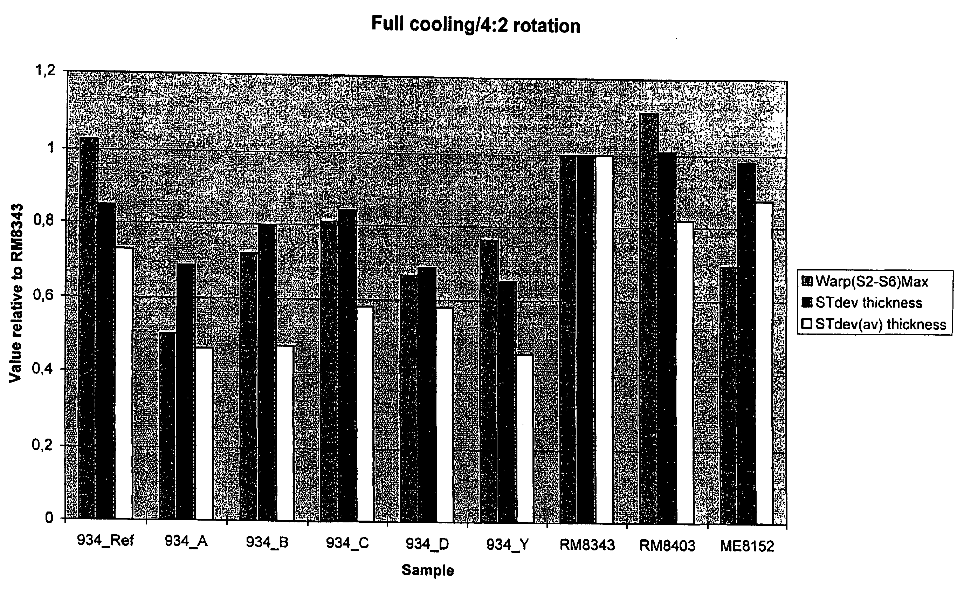

The warpage and thickness data for rotomoulding serial 1 with all blends is displayed in Annex 3. Data for serial 3 is displayed in Annex 4. These results are graphically depicted in Figure 2.

As will be seen, the warpage results for the compositions 934Y, 934A, 934B, 934C and 934 D are better than the results obtained using the available commercial grades.

**Annex 1 PREPARATION OF COMPONENTS A & B USING (nBu-Cp)₂ZrCl₂/MAO ON SILICA**

| Cal temp (°c)/Loading (%) | 600/100 | 600/100 | 600/100 | 600/100 | 600/100 | 600/100 | 600/100 | 600/100 |
|---|---|---|---|---|---|---|---|---|
| IMP | Dry-mix | Dry-mix | Dry-mix | Dry-mix | Dry-mix | Dry-mix | Dry-mix | Dry-mix |
| Reac temp | 94 | 94 | 94 | 94 | 85 | 85 | 85 | 85 |
| Reac pres (bar | 25,5 | 25,5 | 25,5 | 25,5 | 23,1 | 23,1 | 23,1 | 23,1 |
| Etene partial pressure (bar) | 7,5 | 7,5 | 7,5 | 7,5 | 7,5 | 7,5 | 7,5 | 7,5 |
| Eten H2 ratio (ppmH2) | 420 | 420 | 420 | 420 | 650 | 650 | 650 | 440 |
| C6/Etene-Cascade (Wt%C8) | 0,00 | 0,00 | 0,00 | 0,00 | 6,00 | 6,00 | 6,00 | 6,00 |
| TOTAL RUN TIME (min) | 60 | 60 | 60 | 60 | 60 | 60 | 60 | 60 |
| MFR2 (powder) | 6,1 | 6,4 | 6,8 | 6,2 | 8,1 | 8,5 | 8,3 | 6,5 |
| MFR21 (powder) | 95 | 105 | 121 | 103 | 123,0 | 122 | 120 | 110 |
| FFR (powder) | 15,6 | 16,4 | 17,8 | 16,6 | 15,2 | 14,4 | 14,5 | 16,9 |
| DENSITY (powder kg/dm³ | 0,9573 | 0,9577 | 0,9563 | 0,9568 | 0,9224 | 0,9214 | 0,9216 | 0,9245 |
| | **COMPONENT A** | | | | **COMPONENT B** | | | |

**Annex 2 9_1.4 std vs 4_2 full cool (Roto1 vs Roto 3)**

| Material | | 934_A(std) | 934_A(fc4/2) | RM8343(std) | RM8343(fc4/2) | ME8152(std) | ME8152(fc4/2) |
|---|---|---|---|---|---|---|---|
| Warpage | | | | | | | |
| Center | S2E | 0.45 | -0.5 | 0.34 | 0.48 | 1.04 | 1.92 |
| | S3E | 1.61 | 1.5 | 2.15 | 4.71 | 1.9 | 2.5 |
| | S4E | 0.67 | -1.11 | 1.5 | 1.28 | 1.66 | 1.34 |
| | S5E | 1.4 | 1.6 | 2.75 | 4.86 | 1.71 | 2.66 |
| | S6E | 0.3 | 3.8 | 3.82 | 5.87 | 1.6 | 3.95 |
| | **WAv(S2-S6)E** | **0.886** | **1.058** | **2.112** | **3.44** | **1.582** | **2.474** |
| Max | S2max | 0.65 | 0.8 | 0.69 | 1.02 | 1.09 | 1.92 |
| | S3max | 1.61 | 1.5 | 2.15 | 4.71 | 1.9 | 2.5 |
| | S4max | 0.69 | 1.2 | 1.72 | 1.28 | 1.79 | 1.34 |
| | S5max | 1.4 | 1.6 | 2.75 | 4.86 | 1.75 | 2.66 |
| | S6max | 0.34 | 3.8 | 4.01 | 5.87 | 1.6 | 3.95 |
| | **WAv(S2-S6)max** | **0.938** | **1.78** | **2.264** | **3.548** | **1.626** | **2.474** |
| **Thickness** | 2.A | 3.55 | 3.55 | 3.64 | 3.62 | 3.43 | 3.69 |
| | 2.B | 3.36 | 3.67 | 3.59 | 3.73 | 3.37 | 3.85 |
| | 2.C | 3.49 | 3.76 | 3.69 | 3.89 | 3.77 | 4.01 |
| | 2.D | 3.6 | 3.88 | 3.69 | 3.92 | 3.71 | 4.05 |
| | 2.E | 3.37 | 3.46 | 3.58 | 3.86 | 3.56 | 4 |
| | 3.A | 3.24 | 3.05 | 3.69 | 3.22 | 3.28 | 3.1 |
| | 3.B | 3.23 | 3.34 | 3.47 | 3.17 | 3.18 | 3.16 |
| | 3.C | 3.52 | 3.65 | 3.48 | 3.55 | 3.68 | 3.77 |
| | 3.D | 3.55 | 3.74 | 3.43 | 3.54 | 3.51 | 3.67 |
| | 3.E | 3.02 | 2.9 | 3.22 | 2.56 | 3.15 | 2.91 |
| | 4.A | 3.19 | 3.59 | 3.51 | 3.81 | 3.38 | 3.81 |
| | 4.B | 3.31 | 3.76 | 3.49 | 3.75 | 3.47 | 3.67 |
| | 4.C | 3.57 | 3.7 | 3.76 | 3.89 | 3.69 | 4.06 |
| | 4.D | 3.57 | 3.74 | 3.56 | 3.91 | 3.54 | 3.93 |
| | 4.E | 3.41 | 3.72 | 3.61 | 3.88 | 3.63 | 3.99 |
| | 5.A | 3.14 | 3.4 | 3.28 | 3.21 | 3.25 | 3.53 |
| | 5.B | 3.2 | 3.56 | 3.52 | 3.32 | 3.32 | 3.32 |
| | 5.C | 3.48 | 3.54 | 3.63 | 3.67 | 3.67 | 3.58 |
| | 5.D | 3.44 | 3.63 | 3.53 | 3.23 | 3.5 | 3.37 |
| | 5.E | 3.24 | 3.01 | 3.21 | 2.74 | 3.23 | 2.93 |
| | 6.A | 3.82 | 3.35 | 3.83 | 3.73 | 3.64 | 3.77 |
| | 6.B | 3.77 | 3.8 | 3.74 | 4.05 | 3.54 | 4.07 |
| | 6.C | 3.67 | 3.69 | 3.63 | 3.8 | 3.64 | 4.03 |
| | 6.D | 3.77 | 3.61 | 3.72 | 3.75 | 3.81 | 3.75 |
| | 6.E | 3.6 | 3.18 | 3.2 | 3.86 | 3.42 | 3.08 |
| | S2 aver | 3.474 | 3.664 | 3.638 | 3.804 | 3.568 | 3.92 |
| | S3 aver | 3.312 | 3.336 | 3.458 | 3.208 | 3.36 | 3.322 |
| | S4 aver | 3.41 | 3.702 | 3.586 | 3.848 | 3.542 | 3.892 |
| | S5 aver | 3.3 | 3.428 | 3.434 | 3.234 | 3.394 | 3.346 |
| | S6 aver | 3.726 | 3.526 | 3.624 | 3.838 | 3.61 | 3.74 |
| | **Average** | **3.4444** | **3.5312** | **3.548** | **3.5864** | **3.4948** | **3.644** |
| | **ThStDev** | **0.2115435** | **0.26187338** | **0.17385339** | **0.380261752** | **0.18901323** | **0.37310633** |
| | **Stdev(av)** | **0.1730168** | **0.15458719** | **0.09541488** | **0.334088012** | **0.11089274** | **0.291283367** |

**Annex 3 (Roto serial 1 results)**

| Material | | 934_Ref | 934_A | 934_B | 934_C | 934-D | 934_Y | RM8343 | RM8403 | ME8152 |
|---|---|---|---|---|---|---|---|---|---|---|
| Warpage | | | | | | | | | | |
| Center | S2E | 1.25 | 0.45 | 0.92 | 0.95 | 0.42 | 0 | 0.34 | 0 | 1.04 |
| | S3E | 2.91 | 1.61 | 1.25 | 1.5 | 2.1 | 2.2 | 2.15 | 2.85 | 1.9 |
| | S4E | 1.3 | 0.67 | 1.55 | 1.35 | 1.72 | 1.42 | 1.5 | 1.53 | 1.66 |
| | S5E | 2.8 | 1.4 | 1.83 | 2.16 | 2.47 | 3.34 | 2.75 | 3.67 | 1.71 |
| | S6E | 2.6 | 0.3 | 1.6 | 2.22 | 1.61 | 0 | 3.82 | 2.41 | 1.6 |
| | **WAv(S2-S** | **2.172** | **0.886** | **1.43** | **1.636** | **1.664** | **1.392** | **2.112** | **2.092** | **1.582** |
| Max | S2max | 1.3 | 0.65 | 1.47 | 0.95 | 0.66 | 0.77 | 0.69 | 0.9 | 1.09 |
| | S3max | 3.02 | 1.61 | 1.25 | 1.69 | 2.1 | 2.39 | 2.15 | 2.85 | 1.9 |
| | S4max | 1.3 | 0.69 | 1.55 | 1.51 | 1.72 | 1.42 | 1.72 | 1.53 | 1.79 |
| | S5max | 2.8 | 1.4 | 1.83 | 2.16 | 2.58 | 3.34 | 2.75 | 3.67 | 1.75 |
| | S6max | 2.71 | 0.34 | 1.6 | 2.22 | 1.61 | 1.29 | 4.01 | 2.41 | 1.6 |
| | **WAv(S2-S** | **2.226** | **0.938** | **1.54** | **1.706** | **1.734** | **1.842** | **2.264** | **2.272** | **1.626** |
| Thickness | 2.A | 3.61 | 3.55 | 3.45 | 3.45 | 3.59 | 3.42 | 3.64 | 3.35 | 3.43 |
| | 2.B | 3.55 | 3.36 | 3.48 | 3.36 | 3.47 | 3.36 | 3.59 | 3.36 | 3.37 |
| | 2.C | 3.62 | 3.49 | 3.63 | 3.47 | 3.56 | 3.46 | 3.69 | 3.62 | 3.77 |
| | 2.D | 3.53 | 3.6 | 3.55 | 3.77 | 3.56 | 3.48 | 3.69 | 3:59 | 3.71 |
| | 2.E | 3.56 | 3.37 | 3.53 | 3.49 | 3.53 | 3.38 | 3.58 | 3.54 | 3.56 |
| | 3.A | 3.27 | 3.24 | 3.25 | 3.37 | 3.33 | 3.41 | 3.69 | 3.25 | 3.28 |
| | 3.B | 3.34 | 3.23 | 3.45 | 3.24 | 3.37 | 3.24 | 3.47 | 3.13 | 3.18 |
| | 3.C | 3.47 | 3.52 | 3.43 | 3.54 | 3.42 | 3.44 | 3.48 | 3.35 | 3.68 |
| | 3.D | 3.54 | 3.55 | 3.47 | 3.63 | 3.54 | 3.48 | 3.43 | 3.55 | 3.51 |
| | 3.E | 3.23 | 3.02 | 3.29 | 3.35 | 3.22 | 3.18 | 3.22 | 3.04 | 3.15 |
| | 4.A | 3.35 | 3.19 | 3.32 | 3.52 | 3.32 | 3.32 | 3.51 | 3.48 | 3.38 |
| | 4.B | 3.45 | 3.31 | 3.46 | 3.54 | 3.39 | 3.27 | 3.49 | 3.28 | 3.47 |
| | 4.C | 3.68 | 3.57 | 3.71 | 3.55 | 3.62 | 3.48 | 3.76 | 3.5 | 3.69 |
| | 4.D | 3.66 | 3.57 | 3.45 | 3.54 | 3.57 | 3.49 | 3.56 | 3.55 | 3.54 |
| | 4.E | 3.53 | 3.41 | 3.45 | 3.48 | 3.48 | 3.42 | 3.61 | 3.42 | 3.63 |
| | 5.A | 3.19 | 3.14 | 3.19 | 3.53 | 3.19 | 3.38 | 3.28 | 3.21 | 3.25 |
| | 5.B | 3.38 | 3.2 | 3.45 | 3.28 | 3.39 | 3.25 | 3.52 | 3.13 | 3.32 |
| | 5.C | 3.54 | 3.48 | 3.56 | 3.56 | 3.47 | 3.34 | 3.63 | 3.52 | 3.67 |
| | 5.D | 3.43 | 3.44 | 3.39 | 3.65 | 3.34 | 3.29 | 3.53 | 3.45 | 3.5 |
| | 5.E | 3.29 | 3.24 | 3.25 | 3.27 | 3.25 | 3.1 | 3.21 | 3.1 | 3.23 |
| | 6.A | 3:84 | 3.82 | 3.94 | 3.7 | 3.81 | 3.77 | 3.83 | 3.57 | 3.64 |
| | 6.B | 3.86 | 3.77 | 3.64 | 3.7 | 3.78 | 3.66 | 3.74 | 3.62 | 3.54 |
| | 6.C | 3.73 | 3.67 | 3.74 | 3.64 | 3.6 | 3.51 | 3.63 | 3.7 | 3.64 |
| | 6.D | 3.69 | 3.77 | 3.64 | 3.97 | 3.68 | 3.7 | 3.72 | 3.6 | 3.81 |
| | 6.E | 3.42 | 3.6 | 3.36 | 3.47 | 3.41 | 3.39 | 3.2 | 3.26 | 3.42 |
| | S2 aver | 3.574 | 3.474 | 3.528 | 3.508 | 3.542 | 3.42 | 3.638 | 3.492 | 3.568 |
| | S3 aver | 3.37 | 3.312 | 3.378 | 3.426 | 3.376 | 3.35 | 3.458 | 3.264 | 3.36 |
| | S4 aver | 3.534 | 3.41 | 3.478 | 3.526 | 3.476 | 3.396 | 3.586 | 3.446 | 3.542 |
| | S5 aver | 3.366 | 3.3 | 3.368 | 3.458 | 3.328 | 3.272 | 3.434 | 3.282 | 3.394 |
| | S6 aver | 3.708 | 3.726 | 3.664 | 3.696 | 3.656 | 3.606 | 3.624 | 3.55 | 3.61 |
| | **Average** | **3.5104** | **3.4444** | **3.4832** | **3.5228** | **3.4756** | **3.4088** | **3.548** | **3.4068** | **3.4948** |
| | **ThStDev** | **0.179153** | **0.211544** | **0.170898** | **0.166421** | **0.160833** | **0.153577** | **0.173853** | **0.188585** | **0.189013** |
| | **Stdev(av)** | **0.145096** | **0.173017** | **0.121512** | **0.104638** | **0.131015** | **0.123843** | **0.095415** | **0.127739** | **0.110893** |

**Annex 4 (Roto serial 3 results)**

| **Material** | | 934_Ref | 934_A | 934_B | 934_C | 934_D | 934_Y | RM8343 | RM8403 | ME8152 |
|---|---|---|---|---|---|---|---|---|---|---|
| **Warpage** | | | | | | | | | | |
| **Center** | S2E | -2.42 | -0.5 | 1.62 | 2.16 | -0.97 | -2.8 | 0.48 | -3.74 | 1.92 |
| | S3E | 3.2 | 1.5 | 2.11 | -1.9 | -1.65 | -2.36 | 4.71 | 5.03 | 2.5 |
| | S4E | 3.75 | -1.11 | 1.18 | -1.8 | -1.75 | 4.26 | 1.28 | -2.84 | 1.34 |
| | S5E | -3.18 | 1.6 | -2.65 | 2.6 | 2.41 | 2.7 | 4.86 | 5.46 | 2.66 |
| | S6E | 4.79 | 3.8 | 5.11 | 5.5 | 4.71 | -2.7 | 5.87 | 6.84 | 3.95 |
| | Warp(S2-S6 | 1.228 | 1.058 | 1.474 | 1.312 | 0.55 | -0.18 | 3.44 | 2.15 | 2.474 |
| **Max** | S2max | 3.07 | 0.8 | 1.62 | 2.16 | 1.05 | 1.5 | 1.02 | 1.25 | 1.92 |
| | S3max | 3.2 | 1.5 | 2.11 | 2.12 | 1.7 | 2.4 | 4.71 | 5.03 | 2.5 |
| | S4max | 3.75 | 1.2 | 1.18 | 1.97 | 2 | 4.26 | 1.28 | 1.15 | 1.34 |
| | S5max | 3.4 | 1.6 | 2.82 | 2.6 | 2.41 | 2.7 | 4.86 | 5.46 | 2.66 |
| | S6max | 4.79 | 3.8 | 5.11 | 5.5 | 4.71 | 2.7 | 5.87 | 6.84 | 3.95 |
| | Warp(S2-S6 | 3.642 | 1.78 | 2.568 | 2.87 | 2.374 | 2.712 | 3.548 | 3.946 | 2.474 |
| | | | | | | | | | | |
| **Thickness** | 2.A | 3.72 | 3.55 | 3.65 | 3.59 | 3.61 | 3.54 | 3.62 | 3.9 | 3.69 |
| | 2.B | 3.78 | 3.67 | 3.75 | 3.83 | 3.74 | 3.58 | 3.73 | 3.75 | 3.85 |
| | 2.C | 3.98 | 3.76 | 3.88 | 3.74 | 3.79 | 3.63 | 3.89 | 3.97 | 4.01 |
| | 2.D | 3.82 | 3.88 | 3.97 | 3.87 | 3.78 | 3.83 | 3.92 | 3.7 | 4.05 |
| | 2.E | 3.75 | 3.46 | 3.52 | 3.72 | 3.67 | 3.45 | 3.86 | 3.5 | 4 |
| | 3.A | 3.17 | 3.05 | 3.16 | 3.34 | 3.18 | 3 | 3.22 | 3.17 | 3.1 |
| | 3.B | 3.41 | 3.34 | 3.36 | 3.36 | 3.15 | 3.64 | 3.17 | 3.01 | 3.16 |
| | 3.C | 3.77 | 3.65 | 3.64 | 3.42 | 3.47 | 3.56 | 3.55 | 3.59 | 3.77 |
| | 3.D | 3.31 | 3.74 | 3.82 | 3.93 | 3.65 | 3.42 | 3.54 | 3.38 | 3.67 |
| | 3.E | 2.94 | 2.9 | 2.93 | 2.93 | 3.2 | 3.06 | 2.56 | 2.68 | 2.91 |
| | 4.A | 3.63 | 3.59 | 3.74 | 3.51 | 3.46 | 3.6 | 3.81 | 3.64 | 3.81 |
| | 4.B | 3.68 | 3.76 | 3.92 | 3.62 | 3.56 | 3.71 | 3.75 | 3.69 | 3.67 |
| | 4.C | 3.88 | 3.7 | 3.72 | 3.74 | 3.83 | 3.64 | 3.89 | 3.9 | 4.06 |
| | 4.D | 3.62 | 3.74 | 3.82 | 3.9 | 3.89 | 3.7 | 3.91 | 3.75 | 3.93 |
| | 4.E | 3.61 | 3.72 | 3.35 | 3.66 | 3.71 | 3.46 | 3.88 | 3.54 | 3.99 |
| | 5.A | 3.54 | 3.4 | 3.5 | 3.29 | 3.35 | 3.4 | 3.21 | 3.28 | 3.53 |
| | 5.B | 3.22 | 3.56 | 3.86 | 3.5 | 3.48 | 3.16 | 3.32 | 3.29 | 3.32 |
| | 5.C | 3.28 | 3.54 | 3.56 | 3.66 | 3.64 | 3.29 | 3.67 | 3.68 | 3.58 |
| | 5.D | 3.07 | 3.63 | 3.65 | 3.29 | 3.26 | 3.6 | 3.23 | 3.35 | 3.37 |
| | 5.E | 3.03 | 3.01 | 3 | 2.69 | 2.91 | 3.02 | 2.74 | 2.56 | 2.93 |
| | 6.A | 3.41 | 3.35 | 3.3 | 3.63 | 3.55 | 3.34 | 3.73 | 3.33 | 3.77 |
| | 6.B | 3.62 | 3.8 | 3.69 | 3.93 | 3.87 | 3.39 | 4.05 | 3.69 | 4.07 |
| | 6.C | 4.01 | 3.69 | 3.73 | 3.46 | 3.72 | 3.83 | 3.8 | 3.51 | 4.03 |
| | 6.D | 3.85 | 3.61 | 3.75 | 3.62 | 3.76 | 3.82 | 3.75 | 3.6 | 3.75 |
| | 6.E | 2.97 | 3.18 | 2.96 | 2.96 | 3.23 | 3.16 | 3.86 | 2.66 | 3.08 |
| | S2 aver | 3.81 | 3.664 | 3.754 | 3.75 | 3.718 | 3.606 | 3.804 | 3.764 | 3.92 |
| | S3 aver | 3.32 | 3.336 | 3.382 | 3.396 | 3.33 | 3.336 | 3.208 | 3.166 | 3.322 |
| | S4 aver | 3.684 | 3.702 | 3.71 | 3.686 | 3.69 | 3.622 | 3.848 | 3.704 | 3.892 |
| | S5 aver | 3.228 | 3.428 | 3.514 | 3.286 | 3.328 | 3.294 | 3.234 | 3.232 | 3.346 |
| | S6 aver | 3.572 | 3.526 | 3.486 | 3.52 | 3.626 | 3.508 | 3.838 | 3.358 | 3.74 |
| | Average | 3.5228 | 3.5312 | 3.5692 | 3.5276 | 3.5384 | 3.4732 | 3.5864 | 3.4448 | 3.644 |
| | STdev | 0.3220445 | 0.2618734 | 0.3033963 | 0.3188035 | 0.2621494 | 0.2484572 | 0.3802618 | 0.3841996 | 0.3731063 |
| | STdev(av) | 0.2443997 | 0.1545872 | 0.1573124 | 0.1938422 | 0.1940433 | 0.1515955 | 0.334088 | 0.2736881 | 0.2912834 |

## Claims

1. A polymer composition suitable for rotomoulding comprising
I) an ethylene homopolymer having a melt flow rate of 0.5 to 30 (ISO 1133-1997, D), a molecular weight distribution (Mw/Mn) of less than 4, an Mw of 50,000 to 110,000, a density of 0.940 g/cm³ to 0.970 g/cm³ and a melting point of 100 to 145°C;
and
II) an ethylene copolymer with at least one other C₃₋₁₀ α-olefin, having a melt flow rate of within +/- 40% of the melt flow rate of component (I), a molecular weight distribution of (Mw/Mn) of less than 4, an Mw of within +/- 30% of the Mw of component (I), a density of 0.880 g/cm³ to 0.940 g/cm³ said density being at least 0.010 g/cm³ less than the density of component (I) and a melting point of at least 5°C less than that of component (I).

2. A composition as claimed in claim 1 wherein component (I) is an ethylene homopolymer and component (II) is an ethylene copolymer having a melting point of at least 10°C less than that of component (I).

3. A composition as claimed in claim 2 wherein component (II) is an ethylene copolymer with butene, hexene or octene.

4. A composition as claimed in claim 3 wherein component (II) is an ethylene copolymer with hexene.

5. A composition as claimed in any one of claims 2 to 4 wherein the melt flow rates of components (I) and (II) are 4 to 10.

6. A composition as claimed in claim 5 wherein the melt flow rates of components (I) and (II) are 6 to 8.

7. A composition as claimed in any one of claims 2 to 6 wherein the molecular weight distribution of the composition is less than 4.

8. A composition as claimed in any one of claims 2 to 7 wherein the density of component (II) is 910 g/cm³ to 0.930 g/cm³.

9. A composition as claimed in any one of claims 2 to 8 wherein the density of composition is in the range 0.925 to 0.950 g/cm³.

10. A composition as claimed in claim 9 wherein the density of composition is in the range 0.930 to 0.940 g/cm³.

11. A composition as claimed in any one of claims 2 to 10 wherein the melting point of component (I) is in the range 125°C to 135°C and the melting point of component (II) is in the range 100°C to 125°C.

12. A composition as claimed in any one of claims 1 to 11 wherein the molecular weight distribution each of components (I) and (II) is less than 3.

13. The use of a polymer composition as claimed in any one of claims 1 to 12 in rotomoulding.

14. A process for the preparation of an article comprising rotomoulding a composition as claimed in claims 1 to 12.

15. A process as claimed in claim 14 wherein rotomoulding is effected at a rotation speed of 9/1.4 RPM; heating for 13 minutes in oven at 270°C; fan assisted cooling for 10 minutes followed by 6 minutes ambient cooling in the absence of a fan.

16. A rotomoulded article comprising a polymer composition as claimed in any one of claims 1 to 12.

## Patentansprüche

1. Polymerzusammensetzung, die für das Rotationsformen geeignet ist, umfassend:
I) ein Ethylenhomopolymer mit einer Schmelzfließrate von 0,5 bis 30 (ISO 1133-1997, D), einer Molekulargewichtsverteilung (Mw/Mn) von weniger als 4, einem Mw von 50.000 bis 110.000, einer Dichte von 0,940 bis 0,970 g/cm³ und einem Schmelzpunkt von 100 bis 145°C; und
II) ein Ethylencopolymer mit mindestens einem anderen C₃₋₁₀-α-Olefin mit einer Schmelzfließrate innerhalb von ± 40 % der Schmelzfließrate der Komponente (I), einer Molekulargewichtsverteilung (Mw/Mn) von weniger als 4, einem Mw innerhalb von ± 30 % der Mw der Komponente (I), einer Dichte von 0,880 bis 0,940 g/cm³, wobei diese Dichte mindestens 0,010 g/cm³ geringer als die Dichte der Komponente (I) ist, und einem Schmelzpunkt, der mindestens 5°C niedriger als der der Komponente (I) ist.

2. Zusammensetzung nach Anspruch 1, wobei die Komponente (I) ein Ethylenhomopolymer und die Komponente (II) ein Ethylencopolymer mit einem Schmelzpunkt ist, der mindestens 10°C niedriger als der der Komponente (I) ist.

3. Zusammensetzung nach Anspruch 2, wobei die Komponente (II) ein Ethylencopolymer mit Buten, Hexen oder Octen ist.

4. Zusammensetzung nach Anspruch 3, wobei die Komponente (II) ein Ethylencopolymer mit Hexen ist.

5. Zusammensetzung nach einem der Ansprüche 2 bis 4, wobei die Schmelzfließraten der Komponenten (I) und (II) 4 bis 10 betragen.

6. Zusammensetzung nach Anspruch 5, wobei die Schmelzfließraten der Komponenten (I) und (II) 6 bis 8 betragen.

7. Zusammensetzung nach einem der Ansprüche 2 bis 6, wobei die Molekulargewichtsverteilung der Zusammensetzung weniger als 4 beträgt.

8. Zusammensetzung nach einem der Ansprüche 2 bis 7, wobei die Dichte der Komponente (II) 910 bis 0,930 g/cm³ beträgt.

9. Zusammensetzung nach einem der Ansprüche 2 bis 8, wobei die Dichte der Zusammensetzung im Bereich von 0,925 bis 0,950 g/cm³ liegt.

10. Zusammensetzung nach Anspruch 9, wobei die Dichte der Zusammensetzung im Bereich von 0,930 bis 0,940 g/cm³ liegt.

11. Zusammensetzung nach einem der Ansprüche 2 bis 10, wobei der Schmelzpunkt der Komponente (I) im Bereich von 125 bis 135°C und der Schmelzpunkt der Komponente (II) im Bereich von 100 bis 125°C liegt.

12. Zusammensetzung nach einem der Ansprüche 1 bis 11, wobei die Molekulargewichtsverteilung der Komponenten (I) und (II) jeweils weniger als 3 beträgt.

13. Verwendung einer Polymerzusammensetzung nach einem der Ansprüche 1 bis 12 beim Rotationsformen.

14. Verfahren zur Herstellung eines Gegenstandes, das das Rotationsformen einer Zusammensetzung nach den Ansprüchen 1 bis 12 umfaßt.

15. Verfahren nach Anspruch 14, wobei das Rotationsformen mit einer Rotationsgeschwindigkeit von 9/1,4 U/min; einem 13minütigen Erwärmen in einem Ofen bei 270°C, einer 10minütigen, von einem Ventilator unterstützten Abkühlung, gefolgt von einer 6minütigen Abkühlung in der Umgebung ohne einen Ventilator durchgeführt wird.

16. Rotationsgeformter Gegenstand, der eine Polymerzusammensetzung nach einem der Ansprüche 1 bis 12 umfaßt.

## Revendications

1. Composition polymère appropriée pour le moulage par rotation comprenant :
I) un homopolymère d'éthylène ayant un indice de fluage allant de 0,5 à 30 (ISO 1133-1997, D), une répartition du poids moléculaire (Mp/Mn) inférieure à 4, une Mp allant de 50 000 à 110 000, une masse volumique allant de 0,940 g/cm³ à 0,970 g/cm³ et un point de fusion allant de 100 à 145 °C ;
et
II) un copolymère d'éthylène possédant au moins une autre oléfine alpha en C₃₋₁₀ ayant un indice de fluage compris dans ± 40 % de l'indice de fluage du composant (I), une répartition du poids moléculaire (Mp/Mn) inférieure à 4, une Mp comprise dans ± 30 % de la Mp du composant (I), une masse volumique allant de 0,880 g/cm³ à 0,940 g/cm³, ladite masse volumique étant inférieure d'au moins 0,010 g/cm³ à la masse volumique du composant (I) et un point de fusion inférieur d'au moins 5 °C à celui du composant (I).

2. Composition selon la revendication 1 dans laquelle le composant (I) est un homopolymère d'éthylène et le composant (II) est un copolymère d'éthylène ayant un point de fusion inférieur d'au moins 10 °C à celui du composant (I).

3. Composition selon la revendication 2 dans laquelle le composant (II) est un copolymère d'éthylène avec du butène, de l'hexène ou de l'octène.

4. Composition selon la revendication 3 dans laquelle le composant (II) est un copolymère d'éthylène avec de l'hexène.

5. Composition selon l'une quelconque des revendications 2 à 4 dans laquelle les indices de fluage des composants (I) et (II) vont de 4 à 10.

6. Composition selon la revendication 5 dans laquelle les indices de fluage des composants (I) et (II) vont de 6 à 8.

7. Composition selon l'une quelconque des revendications 2 à 6 dans laquelle la répartition du poids moléculaire de la composition est inférieure à 4.

8. Composition selon l'une quelconque des revendications 2 à 7 dans laquelle la masse volumique du composant (II) va de 0,910 g/cm³ à 0,930 g/cm³.

9. Composition selon l'une quelconque des revendications 2 à 8 dans laquelle la masse volumique de la composition est dans la gamme allant de 0,925 g/cm³ à 0,950 g/cm³.

10. Composition selon la revendication 9 dans laquelle la masse volumique de la composition est dans la gamme allant de 0,930 g/cm³ à 0,940 g/cm³.

11. Composition selon l'une quelconque des revendications 2 à 10 dans laquelle le point de fusion du composant (I) est dans la gamme allant de 125 °C à 135 °C et le point de fusion du composant (II) est dans la gamme allant de 100 °C à 125 °C.

12. Composition selon l'une quelconque des revendications 1 à 11 dans laquelle la répartition du poids moléculaire de chacun des composants (I) et (II) est inférieure à 3.

13. Utilisation d'une composition polymère selon l'une quelconque des revendications 1 à 12 dans une opération de moulage par rotation.

14. Procédé de préparation d'un article comprenant de mouler par rotation une composition selon l'une quelconque des revendications 1 à 12.

15. Procédé selon la revendication 14 comprenant un moulage par rotation effectué à une vitesse de rotation de 9/1,4 tr/min ; un chauffage pendant 13 minutes dans un four à 270 °C ; un refroidissement assisté par ventilateur pendant 10 minutes suivi par un refroidissement à température ambiante pendant 6 minutes en l'absence de ventilateur.

16. Article moulé par rotation comprenant une composition polymère selon l'une quelconque des revendications 1 à 12.
